# EUROPEAN PATENT APPLICATION

(11) **EP 2 658 014 A1**
(43) Date of publication of application: **30.10.2013**
(21) Application number: 10861166.6
(22) Date of filing: 22.12.2010
(51) Int. Cl.: H01M 4/58

(54) **ELECTRODE SHEET AND ITS PREPARATION METHOD AND SUPER CAPACITOR AND LITHIUM ION BATTERY**

(71) Applicant: Ocean's King Lighting Science&Technology Co., Ltd., Guangdong 518054 (CN)
(72) Inventor: ZHOU, Mingjie, Shenzhen, Guangdong 518054 (CN); PAN, Jun, Shenzhen, Guangdong 518054 (CN); WANG, Yaobing, Shenzhen, Guangdong 518054 (CN)
(74) Representative: Johnson, Richard Alan
(86) International application number: PCT/CN2010/080139
(87) International publication number: WO 2012/083538

(57) **Abstract**

An electrode sheet is provided. The electrode sheet includes a substrate and a coating layer coated on the substrate. The coating layer includes a graphene fluoride stuff, the graphene fluoride stuff has excellent conductivity. An electrode material produced by the graphene fluoride stuff has higher energy density and higher conductivity. Furthermore, a preparation method of the electrode sheet, a super capacitor and a lithium ion battery used the electrode sheet are provided.

## Description

### FIELD OF THE INVENTION

The present invention relates to an electrode sheet and preparing method thereof, as well as super capacitor and lithium ion battery provided with such electrode sheet.

### BACKGROUND OF THE INVENTION

Super capacitors, also known as electrochemical capacitors having extraordinarily high capacity, are new energy storage devices between ordinary capacitors and secondary batteries. The amount of energy stored in super capacitors is over 10 times as great as that in conventional capacitors. Compared to batteries, super capacitors have greater power density, shorter charge and discharge time, higher charge and discharge efficiency, long cycle life, as well as wide working temperature range (-40∼75°C), good reliability, and advantages of energy-saving and environmental conservation, thus can be widely used as backup power supply for microcomputer, solar charger, warning device, household appliances, flashbulb of camera, ignition device of aircraft, and particularly the uses in the field of motor-driven cars being investigated have attracted worldwide attention.

Basically, high capacity, tiny size, high energy density and high power density are required for super capacitors and lithium ion batteries. According to the energy density formula, which is described by the equation E=1/2CU², an improvement of energy density can be achieved by increasing specific capacitance which has close relationship with its electrode materials. However, the electrode materials commonly used for producing super capacitors and lithium ion batteries have general problems of limited conductivity that cause difficulties in improving energy density of produced super capacitors and lithium ion batteries further.

### SUMMARY OF THE INVENTION

In view of this, it is necessary to provide an electrode sheet of excellent conductivity.

An electrode sheet including a substrate and a coating layer coated on the substrate, wherein the coating layer includes graphene fluoride materials.

Preferably, the coating layer further includes conductive agent and binder, in addition, mass fractions of the conductive agent, binder and the graphene fluoride materials are separately represented by x, y, z, x+y+z=1, 2%<x<15%, 3%<y<15%, 70%<z<95%.

Preferably, conductive agent is at least one of acetylene black, carbon nano tube, vapor grown carbon fiber, conductive graphite and conductive carbon black; binder is at least one battery binder of polyvinylidene fluoride and polytetrafluoroethylene.

Preferably, thickness of the coating layer is in the range of 10 to 200 µm.

The above-mentioned electrode sheet made from graphene fluoride having excellent conductivity has higher energy density and higher conductivity. In addition, graphene fluoride and electrolyte have good wettability, and carbon can be formed in the discharge reaction of graphene fluoride, utilization rate of materials is approximately 100%, internal resistance will not increase during the discharge reaction, the discharge voltage remains stable until the end of discharging, so that the whole electrode sheet has great stability.

Moreover, it is necessary to provide a preparation method for electrode sheet of excellent conductivity.

A preparation method for electrode sheet comprising: preparing or providing graphene fluoride materials, mixing said graphene fluoride materials with conductive agent and binder to prepare coating agent; coating substrate with said coating agent to form a coating layer, drying then forming sheet; rolling said sheet and cutting into electrode sheets.

Preferably, preparation for graphene fluoride materials comprises: preparing graphene oxide with graphite raw materials; reducing said graphene oxide in liquid phase to produce graphene; obtaining said graphene fluoride materials by reacting graphene with mixed gases of N₂ and F₂ at 50∼500°C.

Preferably, mass fractions of said conductive agent, binder and said graphene fluoride materials are separately represented by x, y, z, x+y+z=1, 2%<x<15%, 3%<y<15%, 70%<z<95%. More preferably, mass ratio of conductive agent, binder and fluoride oxide graphene materials can be 1:1:8, 1:1:18, 2:1:8.5; said conductive agent is at least one of acetylene black, carbon nano tube, vapor grown carbon fiber, conductive graphite and conductive carbon black; said binder is at least one of polyvinylidene fluoride and polytetrafluoroethylene.

Preferably, thickness of said coating layer is in the range of 10 to 200 µm. More preferably, thickness of coating layer is in the range of 50 to 100 µm.

The above preparing method is easy to operate, has low demand for equipment, and can be applied widely.

Besides, it is necessary to provide super capacitor having high energy density, and lithium ion battery. Such super capacitor of higher energy density and higher conductivity is provided with the above electrode sheet. The above electrode sheet can also be used as negative electrode of lithium ion battery, and the lithium ion battery has higher energy density and better stability.

### BRIEF DESCRIPTION OF THE DRAWINGS

Fig. 1 is a flow chart of preparation method for electrode sheet of one embodiment of the present invention;

Fig. 2 is charge-discharge curve of super capacitor of Example 1 at a constant current.

### DETAILED DESCRIPTION OF ILLUSTRATED EMBODIMENTS

Further description of electrode sheet and preparation method thereof, as well as super capacitor and lithium ion battery will be illustrated, which combined with embodiments in the drawings.

An electrode sheet of one embodiment comprises a substrate and a coating layer coated on the substrate, wherein the coating layer includes graphene fluoride materials.

Substrate is preferably metal substrate having excellent conductivity, such as aluminum substrate, copper substrate, nickel substrate, etc.

Thickness of the coating layer is in the range of 10 to 200µm. Preferably, the coating layer further includes conductive agent and binder, wherein mass fractions of conductive agent, binder and graphene fluoride materials are separately represented by x, y, z, x+y+z=1, 2%<x<15%, 3%<y<15%, 70%<z<95%; More preferably, mass ratio of conductive agent, binder and graphene fluoride materials can be 1:1:8, 1:1:18, 2:1:8.5; conductive agent can be at least one of acetylene black, carbon nano tube, vapor grown carbon fiber, conductive graphite and conductive carbon black; binder can be at least one battery binders of polyvinylidene fluoride and polytetrafluoroethylene.

Such electrode sheet has higher energy density and higher conductivity owing to graphene fluoride from which the electrode sheet is made. In addition, graphene fluoride and electrolyte have good wettability, and carbon can be formed in the discharge reaction of graphene fluoride, utilization rate of materials is approximately 100%, internal resistance will not increase during the discharge reaction, the discharge voltage remains stable until the end of discharging, so that the whole electrode sheet has great stability.

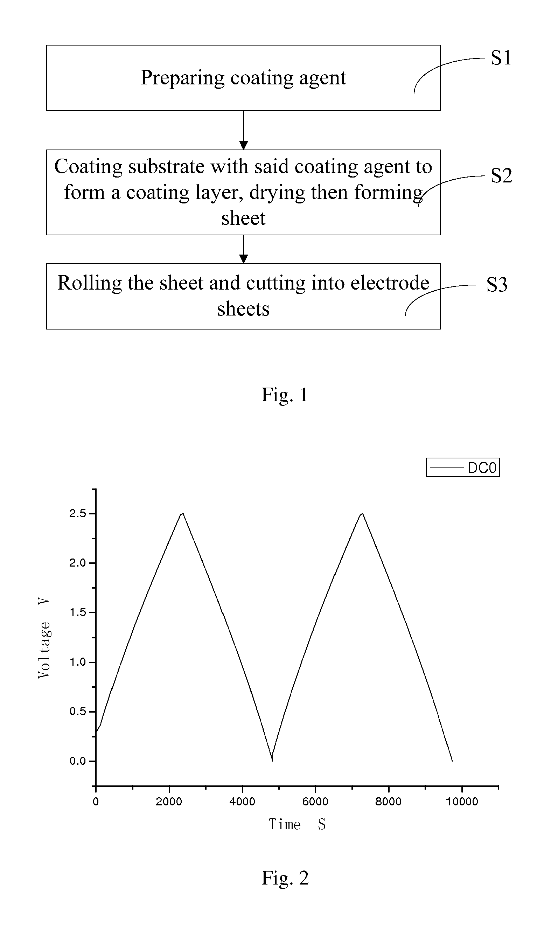

As shown in Fig. 1, a preparation method for the above-mentioned electrode sheet, comprising:

Step S1: preparing or providing graphene fluoride materials, mixing said graphene fluoride materials with conductive agent and binder to prepare coating agent.

Wherein, graphene fluoride can be made by traditional method or the method as follows:

Step S11, providing graphite raw materials, preparing graphene oxide with said graphite raw materials: adding graphite powders, potassium persulfate and phosphorus pentoxide into concentrated sulfuric acid at 70∼100°C, stirring thoroughly and cooling for over 6h, filtrating, washing the precipitates to neutrality, drying then adding into concentrated sulfuric acid at 0°C, after that, adding potassium permanganate and maintaining the temperature of the reaction system below 20°C for 2 to 4h, then keeping in an oil-bath at 35°C for 2 to 4h, subsequently, adding slowly solution of deionized water containing hydrogen peroxide until the reaction system becomes bright yellow in color, filtrating by applying pressure, washing precipitates with hydrochloric acid, vacuum drying to obtain graphene oxide.

Step S12, reducing said graphene oxide in liquid phase to produce graphene: dissolving graphene oxide as prepared in deionized water to obtain graphene oxide suspensions, sonicating suspensions to disperse, adding hydrazine hydrate and heating to 90∼120°C and reacting for 24∼48, filtrating, washing the obtained precipitates successively with water and methanol, vacuum drying to produce graphene.

Step S13, obtaining graphene fluoride by reacting said graphene with mixed gases of N₂ and F₂ at 50∼500°C: placing graphene as dried into reactor and supplying dry nitrogen for 0.5 to 4h then supplying mixed gases of fluoride and nitrogen, reacting at 50 to 500°C for 3 to 120h, obtaining graphene fluoride, wherein, fluoride accounts for 5∼30% of mixed gases of fluoride and nitrogen by volume ratio.

Mass fractions of conductive agent, binder and graphene fluoride materials are represented by x, y and z, respectively, x+y+z=1, 2%<x<15%, 3%<y<15%, 70%<z<95%; conductive agent can be at least one of acetylene black, carbon nano tube, vapor grown carbon fiber, conductive graphite and conductive carbon black; binder can be at least one of polyvinylidene fluoride and polytetrafluoroethylene.

Step S2: coating substrate with said coating agent to form a coating layer, drying then forming sheet. Preferably, thickness of the coating layer is in the range of 10 to 200 µm.

Step S3: rolling said sheet and cutting into electrode sheets.

The above preparing method is easy to operate, has low demand for equipment, and can be applied widely.

The above-mentioned electrode sheet can be applied in the field of manufacturing super capacitors and lithium ion batteries due to its excellent conductivity.

For example, super capacitor prepared by the above electrode sheet has higher energy density and higher conductivity. During the preparation of super capacitor, electrode sheet, corresponding separator and electrolyte are assembled in glove box according to technique of manufacturing super capacitor; charge-discharge test is carried out after standing for one day. Herein, the separator used for super capacitor is preferably polypropylene separator, which can also be replaced by other separator commonly used in the prior art. Electrolyte used for super capacitor is conventional electrolyte (e.g. aqueous KOH, organic NMe₄BF₄) or ionic liquid electrolyte (e.g. LiTFSI/EMITFSI).

Lithium ion battery provided with the above electrode sheet served as negative electrode has higher energy density and better stability. Herein, electrolyte commonly used for lithium ion battery can be organic electrolyte (e.g. LiF₆ PC EC) or ionic liquid electrolyte (e.g. LiTFSI/ BMITFSI). After assembling, battery is allowed to stand for 24h then tested.

The present invention will be described below in detail referring to preferred embodiments.

Example 1

(1) Preparation of electrode materials graphene fluoride: graphite powders →graphene oxide →graphene → graphene fluoride. Purity of the graphite powders used herein was 99.5%.

Preparation of graphene oxide: Graphene oxide was prepared by improved Hummers method. Firstly, 20g of 50-mesh sieved graphite powders, 10g of potassium persulfate and 10g of phosphorus pentoxide were added into concentrated sulfuric acid at 80°C while stirring thoroughly, then cooled for over 6h, filtrated. The precipitates were washed to neutrality, and then dried. The precipitates as dried were added into 230mL of concentrated sulfuric acid at 0°C, and then 60g of potassium permanganate were added. The temperature of mixture was maintained below 20°C then kept in an oil-bath at 35°C for 2h; subsequently, 920mL of deionized water were slowly added. After 15 minutes, 2.8L of deionized water were added (contains 50mL of hydrogen peroxide having concentration of 30%), then the mixture became bright yellow in color were filtrated by applying pressure, and washed with 5L of hydrochloric acid having concentration of 10%, filtrated, vacuum dried at 60°C for 48 to obtain graphene oxide.

Preparation of graphene: 100mg of graphene oxide and 100mL of deionized water were added into a 250-mL round-bottom flask, the solution was yellow-brown suspensions. Then the suspensions were dispersed by sonicating at 150W. Finally, hydrazine hydrate (1mL, concentration of 98%) was added and heated to 100°C to react for 48h. After being filtrated, the obtained graphene was washed successively with 300mL of water and 300mL of methanol, and then dried in vacuum dry box at 80°C for 48h.

Preparation of graphene fluoride: the graphene as dried were placed into reactor, dry nitrogen was supplied firstly for 3h, then mixed gases of fluoride and nitrogen was supplied for reacting with graphene at 250°C for 6h, graphene fluoride was obtained. Herein, fluoride accounts for 30% of mixed gases of fluoride and nitrogen, nitrogen was served to dilute.

(2) Preparation of electrode sheets: sheet → rolling sheet → electrode sheets.

Preparation of sheet: 1.25g of graphene fluoride, 0.25g of acetylene black, 0.25g of polyvinylidene fluoride were weighed and mixed. NMP (N-Methyl pyrrolidone) was dripped into the mixture to make it become pulpy. After being thoroughly stirred and mixed, the mixture was used to coat metal aluminium foil where the thickness of coating layer was 200 µm, then vacuum dried at 100°C for 12h and taken out to form said sheet.

Rolling sheet: The obtained sheet was rolled with rolling mill, the thickness after rolling became 165 µm.

Cutting sheet: the rolled sheet was cut into circular electrode sheets in the size of 10mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 0.5mol/L solution of 1-ethyl-3-methylimidazolium tetrafluoroborate.

Fig. 2 is charge-discharge curve of super capacitor as prepared at a constant current. (Abscissa: time, unit: second (s); ordinate: voltage, unit: volt (V)), where voltage was in the range of 0∼2.5V, electric current was 1A/g electrode sheet. It can be seen from Fig. 2 that the charge-discharge curve of such super capacitor exhibited great linear characteristics; charge-discharge curve at a constant current shaped like an isosceles triangle indicated that there was a linear relation between potential and time shown in discharge curve, double-layer characteristics showed up obviously, small voltage drop suggested internal resistance of materials was very low, which is suitable for charging and discharging rapidly, the capacitance was 111.32 F/g. It can be seen from Tab. 1 that charge specific capacity of the super capacitor was 118.48 F/g, discharge specific capacity was 111.32 F/g, and charge/discharge efficiency was 93.96%, the charge/discharge efficiency was superior.

Example 2

(1) Preparation of electrode materials graphene fluoride: the same as Example 1.

(2) Preparation of electrode sheets: sheet → rolling sheet → electrode sheets.

Preparation of sheet: 2.5g of graphene fluoride, 0.25g of carbon nano tube, 0.25g of polytetrafluoroethylene were weighed and mixed. Ethanol was dripped into the mixture to make it become pulpy. After being thoroughly stirred and mixed, the mixture was used to coat nickel foam where the thickness of coating layer was 160 µm, then vacuum dried at 100°C for 12h and taken out to form said sheet.

Rolling sheet: The obtained sheet was rolled with rolling mill, the thickness after rolling became 120 µm.

Cutting sheet: the rolled sheet was cut into circular electrode sheets in the size of 8mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L solution of potassium hydroxide.

It can be seen from Tab. 1 that charge specific capacity of the super capacitor was 239.56 F/g, discharge specific capacity was 230.69 F/g, and charge/discharge efficiency was 96.30%, the charge/discharge efficiency was superior.

Example 3

(1) Preparation of electrode materials graphene fluoride: the same as Example 1.

(2) Preparation of electrode sheets: sheet → rolling sheet → electrode sheets.

Preparation of sheet: 3.75g of graphene fluoride, 0.25g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 100 µm, then vacuum dried at 100°C for 12h and taken out to form said sheet.

Rolling sheet: The obtained sheet was rolled with rolling mill, the thickness after rolling became 80 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 98.53 F/g, discharge specific capacity was 95.96 F/g, and charge/discharge efficiency was 97.39%, the charge/discharge efficiency was superior.

Example 4

(1) Preparation of electrode materials graphene fluoride: the same as Example 1.

(2) Preparation of electrode sheets: sheet → rolling sheet → electrode sheets.

Preparation of sheet: 9.5g of graphene fluoride, 0.25g of vapor grown carbon fiber, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 10 µm, then vacuum dried at 100°C for 12h and taken out to form said sheet.

Rolling sheet: The obtained sheet was rolled with rolling mill, the thickness after rolling became 8 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 106.85 F/g, discharge specific capacity was 102.29 F/g, and charge/discharge efficiency was 95.73%, the charge/discharge efficiency was superior.

Example 5

(1) Preparation of electrode materials graphene fluoride: the same as Example 1.

(2) Preparation of electrode sheets: sheet → rolling sheet → electrode sheets.

Preparation of sheet:6.25g of graphene fluoride, 0.25g of conductive carbon black, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 50 µm, then vacuum dried at 100°C for 12h and taken out to form said sheet.

Rolling sheet: The obtained sheet was rolled with rolling mill, the thickness after rolling became 45 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 87.81 F/g, discharge specific capacity was 83.24 F/g, and charge/discharge efficiency was 94.80%, the charge/discharge efficiency was superior.

Example 6

(1) Preparation of electrode materials graphene fluoride: the same as Example 1.

(2) Preparation of electrode sheets: sheet → rolling sheet → electrode sheets.

Preparation of sheet: 7.5g of graphene fluoride, 0.25g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 40 µm, then vacuum dried at 100°C for 12h and taken out to form said sheet.

Rolling sheet: The obtained sheet was rolled with rolling mill, the thickness after rolling became 35 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 120.03 F/g, discharge specific capacity was 116.26 F/g, and charge/discharge efficiency was 96.86%, the charge/discharge efficiency was superior.

Example 7

(1) Preparation of electrode materials graphene fluoride: the same as Example 1.

(2) Preparation of electrode sheets: sheet → rolling sheet → electrode sheets.

Preparation of sheet: 9g of graphene fluoride, 0.25g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 120 µm, then vacuum dried at 100°C for 12h and taken out to form said sheet.

Rolling sheet: The obtained sheet was rolled with rolling mill, the thickness after rolling became 100 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 103.84 F/g, discharge specific capacity was 100.33 F/g, and charge/discharge efficiency was 97.10%, the charge/discharge efficiency was superior.

Example 8

(1) Preparation of electrode materials graphene fluoride: the same as Example 1.

(2) Preparation of electrode sheets: sheet → rolling sheet → electrode sheets.

Preparation of sheet: 2.125g of graphene fluoride, 0.5g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 180 µm, then vacuum dried at 100°C for 12h and taken out to form said sheet.

Rolling sheet: The obtained sheet was rolled with rolling mill, the thickness after rolling became 160 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 95.66 F/g, discharge specific capacity was 92.92 F/g, and charge/discharge efficiency was 97.13%, the charge/discharge efficiency was superior.

Example 9

(1) Preparation of electrode materials graphene fluoride: the same as Example 1.

(2) Preparation of electrode sheets: sheet → rolling sheet → electrode sheets.

Preparation of sheet: 8.5g of graphene fluoride, 0.25g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 30 µm, then vacuum dried at 100°C for 12h and taken out to form said sheet.

Rolling sheet: The obtained sheet was rolled with rolling mill, the thickness after rolling became 25 µm.

Cutting sheet: the rolled sheet was cut into circular electrode sheets in the size of 12mm with puncher, and weighed accurately.

(3) Assembling of super capacitor: electrode sheet, separator and electrolyte were assembled into super capacitor in glove box according to technique of manufacturing super capacitor. Herein, separator was celgard2000 (product from the U.S.), electrolyte was 1mol/L NMe₄BF₄/PC solution.

It can be seen from Tab. 1 that charge specific capacity of the super capacitor was 110.18 F/g, discharge specific capacity was 101.32 F/g, and charge/discharge efficiency was 97.96%, the charge/discharge efficiency was superior.

Example 10

(1) Preparation of electrode materials graphene fluoride: the same as Example 1.

(2) Preparation of electrode sheets: sheet → rolling sheet → electrode sheets.

Preparation of sheet: 5.0g of graphene fluoride, 0.25g of carbon nano tube, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 80 µm, then vacuum dried at 100°C for 12h and taken out to form said sheet.

Rolling sheet: The obtained sheet was rolled with rolling mill, the thickness after rolling became 50 µm.

Cutting sheet: the rolled sheet was cut into circular electrode sheets in the size of 12mm with puncher, and weighed accurately.

(3) Assembling of lithium ion battery: lithium ion battery was assembled from electrode sheet which was served as negative electrode, corresponding positive electrode of battery, shell and electrolyte in glove box according to technique of manufacturing lithium ion battery. The electrolyte was ionic liquid electrolyte LiTFSI / BMITFSI.

Tab. 1 charge/ discharge specific capacity and charge/discharge efficiency of super capacitor

| **Example** | Charge specific capacity (F/g) | Discharge specific capacity (F/g) | Charge/discharge efficiency |
|---|---|---|---|
| **Example 1** | 118.48 | 111.32 | 93.96% |
| **Example 2** | 239.56 | 230.69 | 96.30% |
| **Example 3** | 98.53 | 95.96 | 97.39% |
| **Example 4** | 106.85 | 102.29 | 95.73% |
| **Example 5** | 87.81 | 83.24 | 94.80% |
| **Example 6** | 120.03 | 116.26 | 96.86% |
| **Example 7** | 103.84 | 100.33 | 97.10% |
| **Example 8** | 95.66 | 92.92 | 97.13% |
| **Example 9** | 110.18 | 101.32 | 97.96% |

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. An electrode sheet including a substrate and a coating layer coated on said substrate, wherein said coating layer includes graphene fluoride materials.

2. The electrode sheet as claimed in claim 1, wherein said coating layer further includes conductive agent and binder, in addition, mass fractions of said conductive agent, binder and said graphene fluoride materials are separately represented by x, y, z, x+y+z=1, 2%<x<15%, 3%<y<15%, 70%<z<95%.

3. The electrode sheet as claimed in claim 2, wherein said conductive agent is at least one of acetylene black, carbon nano tube, vapor grown carbon fiber, conductive graphite and conductive carbon black; said binder is at least one of polyvinylidene fluoride and polytetrafluoroethylene.

4. The electrode sheet as claimed in claim 1, wherein thickness of said coating layer is in the range of 10 to 200 µm.

5. A preparation method for electrode sheet, wherein comprising:
preparing or providing graphene fluoride materials, mixing said graphene fluoride materials with conductive agent and binder to prepare coating agent;
coating substrate with said coating agent to form a coating layer, drying then forming sheet;
rolling said sheet and cutting into electrode sheets.

6. The preparation method for electrode sheet as claimed in claim 5, wherein said preparation for graphene fluoride materials comprises:
preparing graphene oxide with graphite raw materials;
reducing said graphene oxide in liquid phase to produce graphene;
obtaining said graphene fluoride materials by reacting graphene oxide with mixed gases of N₂ and F₂ at 50∼500°C.

7. The preparation method for electrode sheet as claimed in claim 5, wherein mass fractions of said conductive agent, binder and said graphene fluoride materials are separately represented by x, y, z, x+y+z=1, 2%<x<15%, 3%<y<15%, 70%<z<95%; said conductive agent is at least one of acetylene black, carbon nano tube, vapor grown carbon fiber, conductive graphite and conductive carbon black; said binder is at least one of polyvinylidene fluoride and polytetrafluoroethylene.

8. The preparation method for electrode sheet as claimed in claim 5, wherein thickness of said coating layer is in the range of 10 to 200 µm.

9. A super capacitor, wherein provided with electrode sheet as claimed in any one of the claims from 1 to 4.

10. A lithium ion battery provided with negative electrode, wherein said negative electrode is electrode sheet as claimed in any one of the claims from 1 to 4.
